# EUROPÄISCHE PATENTANMELDUNG

(11) **EP 0 531 616 A1**
(43) Veröffentlichungstag der Anmeldung: **17.03.1993**
(21) Anmeldenummer: 92107107.2
(22) Anmeldetag: 25.04.1992
(51) Int. Cl.: B21C 37/15, G01N 33/60

(54) **Kapillarröhrchen aus Sondermetall und Verfahren zu seiner Herstellung**

(30) Priorität: 13.09.1991 DE 4130524
(71) Anmelder: W.C. Heraeus GmbH, D-63450 Hanau (DE)
(72) Erfinder: Wiesner, Bruno, W-6480 Wächtersbach (DE); Lange, Dieter, W-6467 Hasselroth 2 (DE); Tüshaus, Hans-Joachim, W-6450 Hanau (DE); Gasche, Hartmut, W-6467 Hasselroth 3 (DE); Seibert, Andreas, W-6450 Hanau (DE)

(57) **Zusammenfassung**

Es sind nahtlose Kapillarröhrchen mit einem Außendurchmesser von weniger 4 mm, die im wesentlichen aus einem Sondermetall bestehen, bekannt. Um ein flexibles Kapillarröhrchen aus Sondermetall und ein einfaches und kostengünstiges Verfahren zu seiner Herstellung anzugeben, das eine hohe chemische Beständigkeit und, über eine Länge von mindestens 3 m, einen konstanten Innendurchmesser und eine glatte Innenoberfläche aufweist und das Innendrücken von mindestens 500 bar standhält, entspricht die Wandstärke des Kapillarröhrchens mindestens dem 1,2-fachen seines Innendurchmessers, und ist die Wand aus mindestens zwei konzentrisch zueinander verlaufenden Schichten aufgebaut, die paßgenau aufeinanderliegen, wobei die Wandstärke jeder einzelnen Schicht weniger als das 1,4-fache ihres Innendurchmessers beträgt.

## Beschreibung

Die Erfindung betrifft ein nahtloses Kapillarröhrchen mit einem Außendurchmesser von weniger als 4 mm, das im wesentlichen aus Sondermetall besteht und ein Verfahren zu seiner Herstellung. Unter den Sondermetallen werden im allgemeinen die Metalle Ti, Zr, Hf, Nb, Ta, V, Cr, Mo, W und Be eingeordnet.

Die bekannten Kapillarröhrchen werden beispielsweise durch Langziehen eines nahtlosen Rohres über ein darin angeordnetes Innenwerkzeug, beispielsweise einer Klavier-Saite, hergestellt. Das Entfernen des Innenwerkzeuges nach dem Langziehen des Rohres erfolgt im allgemeinen durch Herausziehen aus dem bis dahin hergestellten Röhrchen, wobei aber gewährleistet werden muß, daß das Innenwerkzeug nicht reißt. Je dünner das Ziehwerkzeug ist, umso höher werden die Festigkeitsanforderungen an das Material. Kommerziell erhältlich sind nur Innenwerkzeuge bis zu einem minimalen Außendurchmesser von 0,3 mm.

Beim Herausziehen des Innenwerkzeuges aus dem bis dahin hergestellten Röhrchen besteht die Gefahr, daß dieses verformt und seine Innenoberfläche beschädigt wird. Dies ist umso mehr der Fall, je dicker die Wandstärke des Röhrchens im Vergleich zum Durchmesser des Innenwerkzeuges ist. Bei sehr dickwandigen Röhrchen läßt sich, aufgrund der radial nach innen auf das Innenwerkzeug wirkenden Kräfte, dieses überhaupt nicht mehr aus dem Röhrchen herausziehen. Mit dem beschriebenen Verfahren sind daher nur Kapillarröhrchen mit einem minimalen Innendurchmesser von ca. 0,3 mm und mit einer verhältnismäßig dünnen Wandstärke herstellbar. Zur weiteren Verringerung des Innendurchmessers auf einen gewünschten Wert, kann das so hergestellte Röhrchen zwar weiter langgezogen werden, dabei verringert sich jedoch nicht nur die Wandstärke des Röhrchens entsprechend, es hat sich auch gezeigt, daß die Innenoberfläche des Röhrchens beim Langziehen ohne Innenwerkzeug umso mehr geschädigt wird, je höher der zur Erreichung eines gewünschten Innendurchmessers erforderliche Verformungsgrad und je dicker die Anfangswandstärke des Röhrchens ist.

Für einige Anwendungen, beispielsweise als Verbindungsleitungen für Chromatographie-Geräte, werden Kapillarröhrchen benötigt, die nicht nur einen konstanten Innendurchmesser über eine vorgegebene Länge und eine möglichst glatte Innenoberfläche aufweisen, sondern auch sehr hohen Innendrucken standhalten. Zum Trennen der zu untersuchenden Flüssigkeiten in ihre chemischen Bestandteile und zur Vermeidung einer erneuten Durchmischung bereits getrennter Bestandteile, ist es erforderlich, die Kapillarröhrchen mit einem Innenüberdruck zu beaufschlagen, der bis zu 500 bar betragen kann. Nur so ergeben sich scharfe Meßsignale im Detektor. Kapillarröhrchen, die diese Anforderung hinsichtlich der Festigkeit erfüllen, bestehen bisher beispielsweise aus Edelstahl. Im Gegensatz zu den eher spröden Sondermetallen, haben Kapillarröhrchen aus Edelstahl auch bei einer geringen Wandstärke eine ausreichend hohe Festigkeit. Allerdings ist ihre chemische Beständigkeit gegenüber manchen der zu prüfenden Medien nicht ausreichend. Demgegenüber ist die chemische Beständigkeit von Sondermetallen gegenüber den meisten der mittels der Chromatographie zu prüfenden Flüssigkeiten wesentlich besser. Geeignete Kapillarröhrchen aus Sondermetall, die insbesondere hohen mechanischen Belastungen widerstehen können, waren jedoch bisher weder bekannt, noch sind sie mit den bekannten Verfahren herstellbar.

Der vorliegenden Erfindung liegt die Aufgabe zugrunde, ein flexibles Kapillarröhrchen aus Sondermetall und ein einfaches und kostengünstiges Verfahren zu seiner Herstellung anzugeben, das eine hohe chemische Beständigkeit und, über eine Länge von mindestens 3 m, einen konstanten Innendurchmesser und eine glatte Innenoberfläche aufweist und das Innendrücken von mindestens 500 bar standhält.

Die Aufgabe wird hinsichtlich des Kapillarröhrchens dadurch gelöst, daß die Wandstärke des Kapillarröhrchens mindestens dem 1,2fachen seines Innendurchmessers entspricht, und daß die Wand aus mindestens zwei konzentrisch zueinander verlaufenden Schichten aufgebaut ist, die paßgenau aufeinanderliegen, wobei die Wandstärke jeder einzelnen Schicht weniger als das 1,4fache ihres Innendurchmessers beträgt. Dadurch, daß die Wandstärke des Kapillarröhrchens mindestens dem 1,2-fachen des Innendurchmessers entspricht, wird gewährleistet, daß das Kapillarröhrchen einem hohen Innendruck standhält. Eine derartige Wandstärke ist bei nahtlosen Kapillarröhrchen aus Sondermetall mit einem Außendurchmesser von weniger als 4 mm mit den bekannten Verfahren nicht herstellbar. Die Ausbildung der Wand des Kapillarröhrchens aus mindestens zwei konzentrisch zueinander verlaufenden Schichten, die paßgenau aufeinanderliegen, wobei die Wandstärke jeder einzelnen Schicht weniger als das 1,4-fache des von ihr bestimmten Innendurchmessers beträgt, ermöglicht eine einfache Anpassung der Wandstärke und der verwendeten Materialien an die zu erwartenden mechanischen Belastungen und an die chemischen Einsatzbedingungen für das Kapillarröhrchen. Es ist auch möglich, insbesondere bei starken mechanischen Beanspruchungen der Oberfläche des Kapillarröhrchens, dieses mit einer Hülse, beispielsweise einer Schutzhülse aus Edelstahl, zu umgeben.

Es hat sich als vorteilhaft erwiesen, den Innendurchmesser des Kapillarröhrchens mit einem konstanten Durchmesserwert zwischen etwa 0,1 mm und etwa 0,3 mm auszubilden. Dadurch wird gewährleistet, daß die Kapillarröhrchen bei hoher Beständigkeit gegen einen hohen Innen-Überdruck, eine ausreichende Flexibilität aufweisen.

Es haben sich insbesondere Kapillarröhrchen bewährt, die aus Schichten aus unterschiedlichen Materialien bestehen. Dies ermöglicht eine einfache Anpassung des Kapillarröhrchens an die Festigkeitsanforderungen und an die chemischen Einsatzbedingungen. So kann beispielsweise die obere Schicht aus einem Material bestehen, das verlötbar, klebbar oder auf sonstige Weise leicht mit einem anderen Bauteil, beispielsweise einem Fitting zum Verbinden des Kapillarröhrchens mit einem Gerät, verbindbar ist, wogegen die innere Schicht aus einem Sondermetall bestehen kann, das bei den gegebenen Einsatzbedingungen chemisch besonders stabil ist.

Hinsichtlich einer möglichst hohen mechanischen Festigkeit hat sich ein Kapillarröhrchen als vorteilhaft erwiesen, bei dem die Schichten miteinander chemisch verbunden sind. Die chemische Verbindung zwischen zwei Schichten kann beispielsweise durch eine Diffusionsschicht zwischen den beiden zu verbindenden Schichten erreicht werden.

Es hat sich gezeigt, daß Kapillarröhrchen, bei denen die Schichten jeweils im wesentlichen aus Ta, Zr, Ti, Nb, Tb und/oder Wo bestehen, eine besonders hohe Beständigkeit bei gleichzeitig ausreichend guter mechanischer Festigkeit aufweisen. Für einige Anwendungen kann die chemische Beständigkeit des Sondermetalls durch eine Zudotierung von Edelmetall, wie beispielsweise Pd, verbessert werden.

Hinsichtlich des Verfahrens zur Herstellung eines dickwandigen Kapillarröhrchens aus Sondermetall wird die obengenannte Aufgabe erfindungsgemäß dadurch gelöst, daß ein Innen-Rohr koaxial in einem Außen-Rohr angeordnet wird, dessen Innendurchmesser mit wenig Übermaß an den Außendurchmesser des Innen-Rohres angepaßt ist, und Langziehen der Rohr-Anordnung unter Verringerung ihres Gesamt-Außendurchmessers, wobei als Innen-Rohr ein Rohr eingesetzt wird, dessen Innendurchmesser dem Kapillarröhrchen-Innendurchmesser entspricht und das eine Schicht oder mehrere koaxial zueinander angeordnete Schichten aufweist, wobei die Wandstärke jeder Schicht höchstens das 1,4-fach des von ihr bestimmten Innendurchmessers beträgt. Dadurch daß ein Innen-Rohr koaxial in einem Außen-Rohr angeordnet wird, dessen Innendurchmesser mit wenig Übermaß an den Außendurchmesser des Innen-Rohres angepaßt ist, wird gewährleistet, daß beim Langziehen der Rohr-Anordnung zur Verringerung des Gesamt-Außendurchmessers auf den gewünschten Kapillar-Außendurchmesser eine ausreichend feste Verbindung zwischen den einzelnen Schichten des Kapillarröhrchens entsteht, wodurch eine Verformung oder eine Zerstörung des Kapillarröhrchens bei einer Beaufschlagung mit einem hohen Innendruck vermieden werden kann. Als Innen-Rohr wird dabei ein Rohr eingesetzt, dessen Innendurchmesser dem gewünschten Kapillarröhrchen-Innendurchmesser entspricht und der bei dem nachfolgenden Ziehvorgang nicht oder kaum verändert wird. Ob beim Langziehen eines Rohres eine Veränderung des Rohr-Innendurchmessers erfolgt, hängt von einer Reihe von Parametern, wie beispielsweise dem Rohr-Material, der Wandstärke des Rohres, dem Schichtaufbau, der Temperatur beim Langziehen und insbesondere von den dabei wirkenden Kräften, ab. Es hat sich gezeigt, daß bei Rohren, insbesondere bei Rohren mit kleinem Rohr-Innendurchmesser, sich in Abhängigkeit von den Zieh-Parametern ein konstanter für die jeweiligen Zieh-Parameter charakteristischer Rohr-Innendurchmesser einstellen kann, der auch nach Durchlaufen weiterer Ziehvorgänge nicht weiter gezielt verkleinert werden kann, sondern gleich bleibt oder unkontrollierbar schwankt. Wird bei einem Rohr, das bis auf diesen kleinst möglichen Innendurchmesser langgezogen worden ist, die Wandstärke, beispielsweise durch Überziehen eines Außen-Rohres, vergrößert, wird dadurch der bis dahin erreichte Innendurchmesser stabilisiert und er bleibt bei nachfolgenden Ziehvorgängen konstant, unter der Maßgabe, daß die Ziehparameter nicht wesentlich verändert werden. Die für einen gewünschten und konstanten Rohr-Innendurchmesser einzustellenden Zieh-Parameter sind für jedes Rohr anhand weniger Versuche leicht individuell zu ermitteln.

Es hat sich außerdem gezeigt, daß das Innen-Werkzeug aus Rohren, deren Wandstärke mehr als das 1,4fache des Innendurchmessers trägt, nicht oder nur unter Inkaufnahme einer erheblichen Beschädigung der Innenoberfläche des Rohres, aus diesem herausgezogen werden kann. Mit einfachen und wirtschaftlichen Verfahren, bei denen das Innen-Werkzeug aus dem Rohr durch Herausziehen entfernt wird, ist es daher nur möglich, Rohre mit einer Wandstärke herzustellen, die höchstens das 1,4fache des Rohr-Innendurchmessers beträgt. Bei der Herstellung des Innen-Rohres mit dem gewünschten Kapillarröhrchen-Innendurchmesser durch Langziehen ist es jedoch ohnehin vorteilhaft, von einem dünnwandigen Rohr, beispielsweise mit einer Wandstärke, die zwishen 10 % - 50 % des Rohr-Innendurchmessers liegt, auszugehen, um beim Langziehen des Innen-Rohres die Qualität der Innenoberfläche möglichst wenig zu beeinträchtigen. Ein so hergestelltes Rohr kann als Innen-Rohr koaxial in ein Außen-Rohr eingesetzt werden, dessen Innendurchmessers mit wenig Übermaß an den Außendurchmessers des Innen-Rohres angepaßt ist, wobei diese Rohr-Anordnung, unter Verringerung des Gesamt-Außendurchmessers, langgezogen und wiederum als Innen-Rohr eingesetzt werden kann.

Besonders einfach gestaltet sich ein Verfahren, bei dem ein Innen-Rohr mit einem Innendurchmesser von mindestens 0,1 mm und einem Außendurchmesser von mindestens 0,12 mm eingesetzt wird. Ein Innenrohr mit einem Innendurchmesser von 0,1 mm und einem Außendurchmesser von mindestens 0,12 mm kann beispielsweise durch Langziehen eines Rohres mit einem Innendurchmesser von 0,3 mm und einem Außendurchmeser von 0,36 mm mit den bekannten Verfahren hergestellt werden. Es kann auch mehrere koaxial zueinander verlaufende Schichten aufweisen, die in vorhergehenden Verfahrensschritten bereits auf einem entsprechenden Innen-Rohr mit einem Innendurchmesser von 0,1 mm aufgebracht worden sind.

Es hat sich als vorteilhaft erwiesen, die Rohr-Anordnung nach dem Langziehen zu glühen. Dadurch wird eine Diffusions-Schicht zwischen den einzelnen Schichten des Rohres erzeugt, die eine feste Haftung der Schichten aufeinander und eine hohe Festigkeit des Rohr-Verbundes gewährleistet.

Bei Kapillarröhrchen, die im wesentlichen aus Tantal, Zirkon, Titan und/oder aus Niob bestehen, hat es sich als vorteilhaft erwiesen, daß das Langziehen der Rohr-Anordnung durch Kaltverformen erfolgt.

Ein Ausführungsbeispiel der Erfindung ist in der Zeichnung dargestellt und wird nachstehend näher erläutert. In der Zeichnung zeigt
- Figur 1: in schematischer Darstellung eine Anordnung von einem Innen-Rohr in einem Außen-Rohr vor dem Langziehen der Rohr-Anordnung,
- Figur 2: ein Kapillarröhrchen in schematischer Darstellung und
- Figur 3: eine Vergrößerung eines Querschliffes durch ein erfindungsgemäßes Kapillarröhrchen

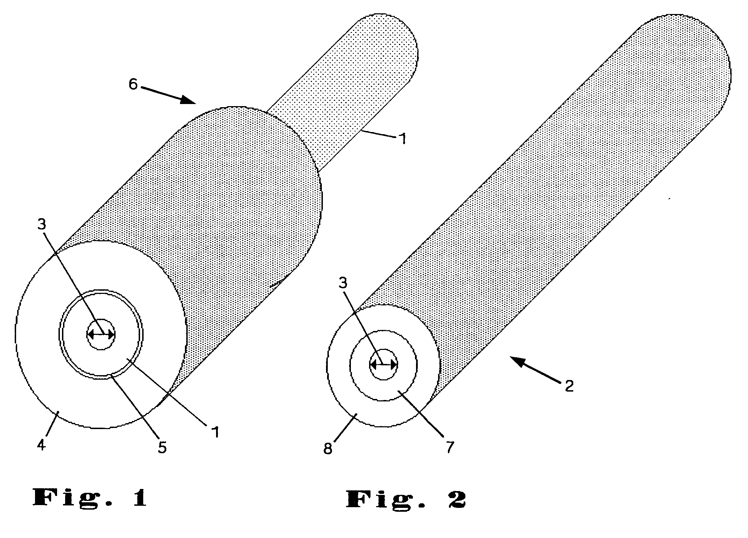

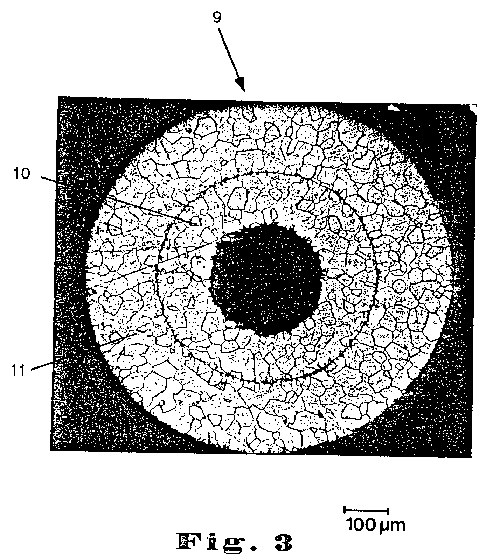

In Figur 1 ist mit der Bezugsziffer 1 ein Innen-Rohr aus Titan mit 0,5 % Palladium, mit einem Außendurchmesser von 0,65 mm und einem Innendurchmesser von 0,3 mm, bezeichnet. Das Innen-Rohr 1 wurde aus einem Ausgangsrohr mit einem Außendurchmesser von 4,1 mm und einem Innendurchmesser von 2,8 mm durch Langziehen hergestellt, wobei das Innen-Rohr 1 in mehreren aufeinanderfolgenden Ziehschritten zunächst mit fortlaufend dünner werdenden Innenwerkzeugen auf einen Außendurchmesser von 1,4 mm und einem Innendurchmesser von 1,02 mm gebracht wird und danach, ebenfalls in mehreren Ziehschritten aber ohne Innenwerkzeuge auf die angegebenen Endemaße langgezogen wurde. Der bis dahin erreichte Innendurchmesser von 0,3 mm entspricht dem gewünschten Innendurchmesser des Kapillarröhrchens 2 (siehe Figur 2) und ist mit dem Maßpfeil 3 gekennzeichnet. Mit den bis dahin verwendeten Ziehparametern ist der Innendurchmesser 3 nicht weiter zu verkleinern. Das Innen-Rohr 1 ist von einem Außen-Rohr 4 umgeben, das ebenfalls aus Palladium-dotiertem Titan besteht und das ein Endmaß mit einem Außendurchmesser von 1,6 mm und einem Innendurchmesser von 1,02 mm aufweist. Das Außen-Rohr 4 wird ähnlich wie das Innen-Rohr 1 aus einem dickwandigerem Ausgangsrohr hergestellt, und in mehreren aufeinanderfolgenden Ziehschritten unter Verwendung fortlaufend dünner werdender Innenwerkzeuge auf das gewünschte Endmaß gezogen. In einem nachfolgenden Verfahrensschritt wird das Innen-Rohr 1 in das Außen-Rohr 4 eingefädelt. Dabei bildet sich zunächst aufgrund des geringen Übermaßes des Außen-Rohres 4 gegenüber dem Außendurchmesser des Innen-Rohres 1 ein Spalt 5 von ca. 0,2 mm aus. Die Rohr-Anordnung 6 wird dann ohne Innenwerkzeug auf einen Außendurchmesser von 1,2 mm und einen Innendurchmesser von 0,3 mm langgezogen, wobei sich durch die Addition der Wandstärken der beiden Rohre 1;4 eine Gesamt-Wandstärke der Rohr-Anordnung 6 ergibt, die gewährleistet, daß sich der Innendurchmesser 3, auch ohne Verwendung eines Innenwerkzeuges, beim Langziehen der Rohr-Anordnung 6 nicht unkontrollierbar ändert, sondern konstant bleibt. Das so hergestellte und in Figur 2 schematisch dargestellte Kapillarröhrchen 2, besteht aus einer Innenschicht 7 mit einem Innendurchmesser von 0,3 mm und eine Außenschicht 8, zu der die Innenschicht 7 konzentrisch verläuft und die paßgenau auf der Innenschicht 7 aufliegt und die einen Außendurchmesser von 1,6 mm aufweist. Bei der Innenschicht 7 beträgt das Verhältnis ihrer Wandstärke zum Innendurchmesser ca. 0,58 bei der Außenschicht 8 beträgt dieses Verhältnis ca. 0,4. In einem letzten Verfahrensschritt wird das Kapillarröhrchen 2 einer Wärmebehandlung unterworfen, die zu einer festeren Verbindung zwischen den Schichten 7; 8 beiträgt.

Das Schliffbild in Figur 3 zeigt mit einer Vergrößerung von 100:1 ein Kapillarröhrchen 9 aus Tantal, das ebenfalls aus zwei konzentrisch zueinander verlaufenden Schichten 10, 11 besteht, wobei die innere Schicht 10 einen Innendurchmesser von 0,25 mm und die äußere Schicht 11 einen Außendurchmesser von 0,9 mm aufweist. Das Verhältnis der Wandstärke des Kapillarröhrchens 9 zu seinem Innendurchmesser beträgt 1,3.

In Anbetracht des kleinen Innendurchmessers von 0,25 mm und der im Vergleich dazu großen Wandstärke von 0,325 mm, ist die Innenoberfläche des Kapillarröhrchens 9 erstaunlich glatt und rund ausgebildet. Das im Schliffbild dargestellte Kapillarröhrchen 9 ist als Verbindungsleitung zuwischen Chromatographie-Geräten gut geeignet. Es weist eine hohe chemische Beständigkeit auf und hält Innen-Überdrücken von 500 bar stand.

## Patentansprüche

1. Nahtloses Kapillarröhrchen mit einem Außendurchmesser von weniger 4 mm, das im wesentlichen aus einem Sondermetall besteht, dadurch gekennzeichnet, daß die Wandstärke des Kapillarröhrchens mindestens dem 1,2-fachen seines Innendurchmessers entspricht, und daß die Wand aus mindestens zwei konzentrisch zueinander verlaufenden Schichten aufgebaut ist, die paßgenau aufeinanderliegen, wobei die Wandstärke jeder einzelnen Schicht weniger als das 1,4-fache ihres Innendurchmessers beträgt.

2. Kapillarröhrchen nach Anspruch 1, dadurch gekennzeichnet, daß der Innendurchmesser des Kapillarröhrchens einen konstanten Wert zwischen 0,1 mm und 0,3 mm aufweist.

3. Kapillarröhrchen nach Anspruch 1 oder 2, dadurch gekennzeichnet, daß die Schichten aus unterschiedlichen Materialien bestehen.

4. Kapillarröhrchen nach einem der Ansprüche 1 bis 3, dadurch gekennzeichnet, daß die Schichten chemisch miteinander verbunden sind.

5. Kapillarröhrchen nach einem der Ansprüche 1 bis 4, dadurch gekennzeichnet, daß die Schichten jeweils im wesentlichen Ta, Zr, Ti, Nb, Mo, Tb und/oder W enthalten.

6. Verfahren zur Herstellung eines dickwandigen, im wesentlichen aus Sondermetall bestehenden Kapillarröhrchens mit einem Außendurchmesser von weniger als 4 mm, dadurch gekennzeichnet, daß ein Innen-Rohr koaxial in einem Außen-Rohr angeordnet wird, dessen Innendurchmesser mit wenig Übermaß an den Außendurchmesser des Innen-Rohres angepaßt ist, und Langziehen der Rohr-Anordnung unter Verringerung ihres Gesamt-Außendurchmessers, wobei als Innen-Rohr ein Rohr eingesetzt wird, dessen Innendurchmesser dem Kapillarröhrchen-Innendurchmesser entspricht und das eine Schicht oder mehrere koaxial zueinander angeordnete Schichten aufweist, wobei die Wandstärke jeder Schicht höchstens das 1,4-fache des von ihr bestimmten Innendurchmessers beträgt.

7. Verfahren nach Anspruch 6, dadurch gekennzeichnet, daß ein Innen-Rohr mit einem Innendurchmesser von mindestens 0,1 mm und einem Außendurchmesser von mindestens 0,12 mm eingesetzt wird.

8. Verfahren nach Anspruch 6 oder 7, dadurch gekennzeichnet, daß ein Außen-Rohr mit einer konstanten Wandstärke, die zwischen 10% und 80% des Außen-Rohr-Innendurchmesser liegt, eingesetzt wird.

9. Verfahren nach einem der Ansprüche 6 bis 8, dadurch gekennzeichnet, daß die Rohr-Anordnung vor dem Langziehen geglüht wird.

10. Verfahren nach einem der Ansprüche 6 bis 9, dadurch gekennzeichnet, daß das Kapillarröhrchen im wesentlichen aus Ta, Zr, Ti und/oder Nb besteht und durch Kaltverformen der Rohr-Anordnung hergestellt wird.
